(19) Europäisches Patentamt / European Patent Office / Office européen des brevets

(11) **EP 4 189 444 B1**

(12) **EUROPEAN PATENT SPECIFICATION**

(45) Date of publication and mention
of the grant of the patent:
**16.07.2025 Bulletin 2025/29**

(21) Application number: **21752184.8**

(22) Date of filing: **21.07.2021**

(51) International Patent Classification (IPC):
**G01W 1/14** $^{(2006.01)}$

(52) Cooperative Patent Classification (CPC):
**G01W 1/14; Y02A 90/10**

(86) International application number:
**PCT/IB2021/056594**

(87) International publication number:
**WO 2022/023887 (03.02.2022 Gazette 2022/05)**

(54) **METHOD FOR THE ESTIMATING THE PRESENCE OF RAIN**

VERFAHREN ZUR SCHÄTZUNG DER ANWESENHEIT VON REGEN

PROCÉDÉ D'ESTIMATION DE LA PRÉSENCE DE PLUIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2020 IT 202000018667**

(43) Date of publication of application:
**07.06.2023 Bulletin 2023/23**

(73) Proprietors:
• **Universita' di Pisa**
  **56126 Pisa (IT)**
• **Consiglio Nazionale Delle Ricerche**
  **00185 Roma (IT)**
• **M.B.I. S.r.l.**
  **95030 Sant'Agata li Battiati (CT) (IT)**

(72) Inventors:
• **GIANNETTI, Filippo**
  **Pisa (IT)**
• **REGGIANNINI, Ruggero**
  **Pisa (IT)**
• **MORETTI, Marco**
  **Pisa (IT)**
• **COLICELLI, Antonio**
  **Pisa (IT)**

(74) Representative: **Lunati & Mazzoni S.r.L.**
**Via Carlo Pisacane, 36**
**20129 Milano (IT)**

(56) References cited:
**EP-A1- 2 688 223     WO-A1-2018/092031**

## EP 4 189 444 B1

**Description**

The present invention relates to a method for the estimating the presence of rain of the type specified in the preamble of the first claim.

In particular, the present invention relates to a method for estimating the presence of rain based on the measurement of the degradation of the signal on the downward path of satellite links with adaptive regulation of the atmospheric parameters reference.

Several methods are currently known for calculating rainfall on a specific territory. The most used and traditional method involves using a rain gauge, that is a container that measures a quantity of water collected in a certain time interval.

It is a precise tool for measuring the rain that has fallen in a given place, net of errors due to the wind (in any case always less than 10%) and to the method of measuring the water collected, which however involves negligible relative errors except for extremely small precipitation.

There are other instruments for the measurement of in-situ precipitation, which use indirect techniques, measuring parameters strictly connected with the precipitation (e.g. kinetic energy of the drops, reflectivity, etc.), with the advantage of providing more information in addition to the quantity of falling rain alone and sometimes having lower maintenance costs.

Areal measurements of rain are instead obtained with meteorological radars, which have different characteristics depending on the band in which they operate and the technology with which they are built.

There are also satellite observations, today an easy-to-access tool for obtaining images from above of cloud formations from which, indirectly, to obtain estimates of precipitation on large domains, including global ones. In general, products are provided obtained from the joint processing of data from multiple observation platforms that measure in different bands, to maximize the accuracy and spatial and temporal resolution with which these estimates are provided. Documents EP2688223A1 and WO2018/092031A1 disclose examples of methods for estimating the presence of rain.

The known art described includes some important drawbacks.

In particular, the rain gauges have a local validity of the measurement, which, for a spatially discontinuous phenomenon such as rain on even km scales, makes the measurement often not well representative of an area such as that determined by the distance of the adjacent rain gauges, even in more instrumented areas, which in any case equivalent to several km, due to the non-negligible costs of these instruments, relating to the purchase, installation, maintenance and transmission of data.

Even instruments that use indirect techniques have the same representativeness problem as classic rain gauges.

Meteorological radars allow measurements with non-negligible errors and dependent on the phenomenology in place. Furthermore, the measurements are affected by problems due to obstacles and clutter in general, and in general radars are instruments that in conditions of complex orography can be blind for some areas of interest. Above all, it should be emphasized that radars are active instruments, therefore they cannot be installed everywhere for reasons of safety for human health (and sometimes also for possible interactions with other instruments); they also have purchase and installation costs that require large initial investments (from a few hundred thousand to several million euros, depending on the type) as well as very important maintenance costs.

Finally, satellite observations produce estimates with spatial errors and resolutions that are not compatible with most of the applications wherein a high degree of accuracy and resolution of the measurement is required, and have mainly value for climatological analyses or in any case for the use integrated with other systems that increase the precision of the final estimates at least locally, above the areas of main interest.

In this situation, the technical task underlying the present invention is to devise a method for estimating the presence of rain capable of substantially obviating at least part of the aforementioned drawbacks.

Within the scope of said technical task, it is an important object of the invention to obtain a method for estimating the presence of rain which allows a precise measurement of the same.

An object of the present invention is to provide a conversion of the total attenuation measurement of the satellite signal induced by rain along the downward path of said signal (in dB) into an estimate of rain intensity (in mm/h).

A further object of the present invention is to provide a method for estimating the presence of rain based on a two-layer tropospheric model (melting layer (ML) and liquid layer (LL)).

Another important object of the invention is to provide a method for estimating the presence of rain that uses a unique relationship which is analytically described by an algebraic equation with a non-explicit solution.

Another important object of the invention is to provide a method for estimating the presence of rain which is capable of giving localized results on the ground, for example by identifying the value for each $km^2$ of soil.

A further object of the invention is to provide a method for estimating the presence of rain which uses the data on the signals of the previous day or days to provide a more precise estimate of the current results.

The technical task and the specified aims are achieved by a method for estimating the presence of rain as claimed in the annexed claim 1.

Preferred technical solutions are highlighted in the dependent claims.

The characteristics and advantages of the invention are clarified below by the detailed description of preferred embodiments of the invention, with reference to the accompanying figures, in which:

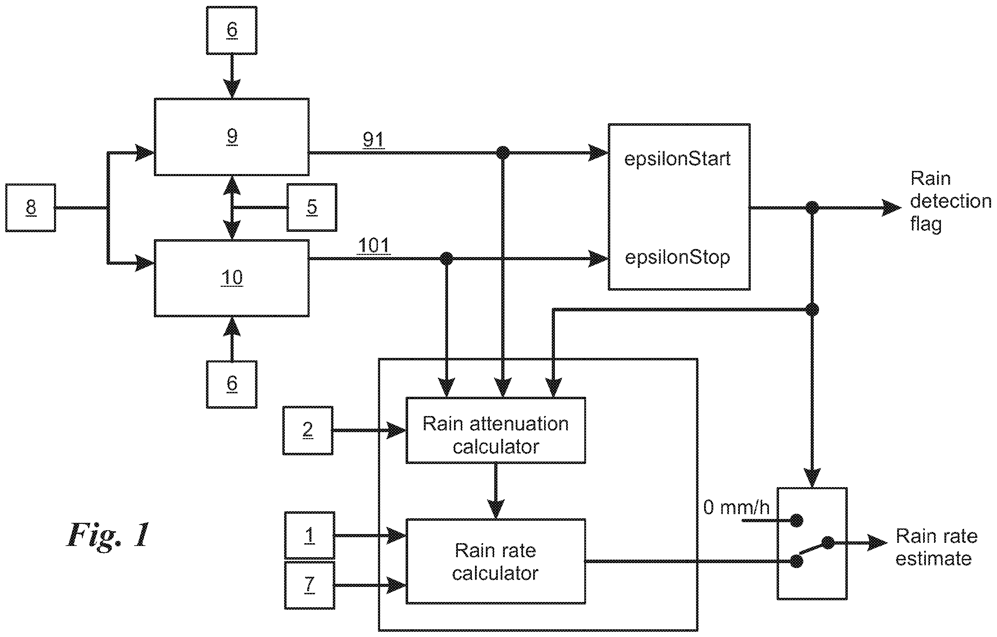

the **Fig. 1** shows a block diagram that schematically shows the method according to the present invention.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the Figures, Fig.1 shows a block diagram which schematizes a preferred embodiment of the method according to the present invention.

Preferably, the method according to the present invention provides for the insertion of a set of static parameters (1), said set of static parameters (1) comprising ambient noise temperatures and a user terminal (TRU) (2), carrier frequency and direction polarization of the signal transmitted by a satellite (3) towards said TRU (2), coordinates TRU (2), longitude of the orbital position of said satellite (3), attenuation coefficient TRU (2), minimum value of the instantaneous Es/NO ratio (4) below which the out of service condition occurs, instantaneous ratio Es/NO, that is, evaluated at a given time, relationship coefficients dB/Km in mm/h, time frequency (T) expressed in seconds, standard deviations (5, 6) for at least two Kalman filters (9, 10), "epsilonStart" and "epsilonStop" thresholds expressed in dB, floating window duration for estimating the standard deviation of output samples, measured waiting time starting from the beginning of precipitation, threshold for the value of the estimated standard deviation used to identify the end of a precipitation.

The instantaneous ratio Es/NO is defined as the ratio between the average radiofrequency energy received by the TRU (2) during a symbol interval and the monolateral power density of the total white Gaussian additive noise, or rather including both that captured by the receiving antenna than that generated internally to the receiver circuits.

Even more preferably, in an essential embodiment of the method according to the present invention said set of static parameters (1) comprising standard deviations (5, 6) for at least two Kalman filters (9, 10), "epsilonStart" and " epsilonStop "expressed in dB, minimum value of the instantaneous Es/NO ratio (4), duration of the floating window for estimating the standard deviation of outgoing samples, waiting time measured from the beginning of the precipitation, threshold for the value of the Estimated standard deviation (15) used to identify the end of a precipitation.

Still, preferably, the method according to the present invention provides for insertion of a set of dynamic parameters (7), said set of dynamic parameters (7) comprising an isotherm altitude above sea level and a thickness of a flux layer in the troposphere,

Preferably, the method according to the present invention it still provides for measuring an instantaneous Es/NO value (8); also in Fig.1 is considered an input parameter and said measurement is carried out through said TRU (2).

Preferably said Es/NO value (8), supplied as input to the method, is the ratio between the average radiofrequency energy received by the TRU (2) during a symbol interval and the mono-lateral power density of the total white Gaussian additive noise.

Preferably, in a step subsequent to the measurement of said instantaneous Es/NO value (8), the method comprises comparing said instantaneous value Es / N0 (8) with a minimum value of instantaneous Es/NO ratio (4).

Still preferably, the method according to the present invention provides for setting the instantaneous measured Es/NO value (8) lower than said minimum instantaneous Es/NO ratio (4), equal to said minimum instantaneous Es/NO ratio (4).

Preferably, a further step of said method provides for the sending of said values to a first Kalman filter (9) adapted to eliminate the disturbances due to the tropospheric scintillation and the gravitational perturbations on the orbit of the satellite (3), said first filter Kalman (9) having a KalmanST output (91).

Preferably, a further step of said method provides for the sending of said values to a second Kalman filter (10) (i.e.adapted to follow the fast variations due to rain), said second Kalman filter (10) having a KalmanFT output (101).

In particular, said second Kalman filter (10) follows fast variations as it is configured with different standard deviation values (6) of the process noise.

Even more preferably, thanks to the defined set of static parameters 1, a further step of the method according to the present invention provides for defining the onset of a precipitative event if a difference between said KalmanST output (91) and said KalmanFT output (101) exceeds called the "epsilonStart" threshold value.

Still, thanks to the defined set of static parameters 1, a further step of the method according to the present invention provides for defining the term of a precipitative event if a difference between said KalmanST output (91) and said KalmanFT output

(101) is less than called the "epsilonStop" threshold value.

Finally, the method of the present invention provides for the conversion of the total attenuation measurement of the satellite signal induced by rain along the route (in dB) into an estimate of rainfall intensity (in mm/h) based on a tropospheric model in two-layer melting layer (ML) and liquid layer (LL) through a unique relationship that is analytically described by an algebraic equation with a non-explicit solution.

The method according to the present invention preferably implements said Kalman filters (9, 10), which filter sources of disturbance of said instantaneous Es/NO value (8) deriving from tropospheric scintillation, satellite oscillation (3) and longitudinal drift of the orbital position of said satellite (3).

Again, preferably in the method according to the present invention a memory register (11) with 1440 elements is used, said elements indexed with an index n = [0,..., 1439], in which the outputs are stored in said register (11) KalmanST (91) acquired at the rate of one sample per minute, if said difference between said KalmanST output (91) and said KalmanFT output (101) does not exceed said "epsilonStart" threshold value.

The KalmanST outputs (91) in "dry conditions" are then recorded with this memory register (11).

Preferably, in the method according to the present invention, the difference between said KalmanST output (91) at element "n" and said KalmanFT output (101) at element "n" is calculated and subsequently the difference between said KalmanST output (91) to the element "n+1" and said KalmanFT output (101) to the element "n + 1". If said difference between said KalmanST output (91) and said KalmanFT output (101) at element "n" does not exceed said threshold value "epsilonStart" while instead said difference between said KalmanST output (91) and said KalmanFT output (101) at 'element "n+1" exceeds the threshold value "epsilonStart", then it is defined as "wet condition".

With reference now to said set of dynamic parameters (7), said set of dynamic parameters (7) is obtained in the form of measurements produced in real time by weather detection systems (i.e. radar, sensor networks, radio sounding satellites). Alternatively, said set of dynamic parameters (7) is obtained in the form of short-term forecasts produced by numerical models of meteorological forecast, (i.e. Weather Research and Forecasting (WRF), Global Forecast System (GFS) and European Center for Medium-range Weather Forecast (ECMWF)).

Again, alternatively said set of dynamic parameters (7) is obtained in the form of statistical values updated at least every 24 hours (e.g. average value, possibly plus or minus a certain number of standard deviations, median value, or various percentiles, obtained for that given location, with reference to the day and time in question, or from the statistical processing of historical data contained in special archives, e.g. Modern Era Retrospective-analysis for Research and Applications (MERRA).

Again, alternatively it is possible to assume a fixed value for each of the parameters in question included in said set of dynamic parameters (7).

Preferably, in the method according to the present invention, said kalman filters (9, 10) are configured with the same standard deviation value (5) of the measurement noise caused from tropospheric scintillation.

Preferably, in the method according to the present invention, said "epsilonStart" value is equal to three times the value of said standard deviation (5) of the noise re measurement caused by tropospheric scintillation.

Preferably, in the method according to the present invention, the standard deviations (5, 6) are deviation of the measurement noise (5) and deviation of the process noise (6), respectively.

Still preferably in the method according to the present invention, in which said Kalman filters (9, 10) are configured with different standard deviation values (6) of the process noise.

The general operation of the method according to the present invention is as follows. The invention finds application in the "downlink" section of a radio and television broadcasting service from a geostationary (GEO) satellite (SAT) directly to the user receiving terminals (TRU).

The invention consists of a method which by way of example comprises the steps of 1) carrying out appropriate tests on the input data, obtained from measurements on the radiofrequency (RF) signal received from the TRU, and recognizing the condition of absence or the condition of presence of precipitation along the SAT-TRU section, 2) carry out in real time an accurate measurement of the time-varying attenuation caused by rain on the RF signal received by the TRU, 3) suitably process the RF signal attenuation measures in order to provide a value of the "average" estimate of the intensity of the rain, expressed in mm/h.

These steps, with specific reference to the measurement of the RF signal, are made complicated by some sources of disturbance which, in addition to rain (rain which causes the attenuation of the signal to be measured), afflict the received RF signal and cause its level is subject to random fluctuations. The main sources of disturbance are tropospheric scintillation (rapid and random variations of the refractive index of the troposphere, which manifests itself in the form of rapid fluctuations of the received signal), the oscillation of the satellite's orbital plane (the level of the received RF signal due to these latter, it undergoes appreciable fluctuations, characterized by a periodicity of 24 hours) and the drift in longitude of the orbital position of the satellite.

Advantageously, since at a given instant during the rain only the value of the signal is available during the rain and therefore in the method it is also necessary to implement a special strategy that produces a reliable reference level in the absence of rain, in fact thanks to said memory register (11) with 1440 elements (equivalent to 24 hours in the case of sampling performed every minute) the data are stored in conditions of absence of rain.

In practice, the variations with a 24 h period are eliminated by keeping the KalmanST output (91) under control, which, in "dry" conditions, follows the variations with a 24 h period due to gravitational phenomena that perturb the satellite's orbit.

In fact, advantageously according to the present method, at a given instant "n", the element "n-1440" represents the value of a previous KalmanST output (91) which was stored in "dry" conditions exactly 24 h before (i.e. 1440 minutes earlier). If 24 h earlier the system had not been in "dry" conditions, then the value of the "n-1440" element dates back to 48 h earlier. If not even 48 h before the system had been in "dry" conditions, then the value of the "n-1440" element goes back to 72 h before, and so on. At instant "n", if you are in the "wet" state, the KalmanFT output (101) represents the current value of the received signal level, including the attenuating effects of rain, while the element "n-1440" represents the signal level (measured 24 h ago, or 48 h, etc.) in "dry" conditions, which serves as a reference for the calculation of the attenuation introduced by the rain. For this purpose, the difference calculated in deciBel (dB) between the element "n-1440" and the KalmanFT output (101) is used to determine the attenuation that the rain has determined on the signal level that would occur if instead that in the "wet" condition it was in the "dry" condition.

Advantageously again, in the step of the method which envisages setting the instantaneous Es/NO (8) lower than said minimum instantaneous Es/NO ratio (4) equal to said minimum instantaneous Es/NO ratio (4), this it is done as measurements of Es/NO that are lower than the minimum Es/NO value (4) are to be considered unreliable, as they are produced by a terminal out of service.

Advantageously, said Kalman filters are configured to function respectively as "slow follower filter" (first Kalman filter (9)) and "fast follower filter" (second Kalman filter (10)). Said first Kalman filter (9) therefore serves to generate a reference level obtained in conditions of absence of rain, with respect to which to measure the reduction of the signal in conditions of presence of rain. Said second Kalman filter (10), in the moment of beginning a precipitation, thanks to the configuration of the process deviation, is sufficiently "reactive" to be able to follow also the reduction of the Es/NO values caused by the rain. Therefore, we can assume that said KalmanFT output (101) represents a very accurate estimate of Es/NO in conditions of rain.

Preferably, in the instant in which you pass from the condition of no rain to that with rain (indicated as the "n"-th minute), the difference (offset) between the value of the last sample supplied as an output from the first is also calculated Kalman filter (9) and the sample stored 24 hours earlier, in the absence of rain, in the register corresponding to the same "n"-th minute. This offset is not affected by the periodic component contained in the instantaneous Es/NO ratio of reference in the absence of rain, since this component has a period of exactly 24 hours. Furthermore, the offset is advantageously applied to all the samples read from the register so as to realign them, without discontinuity, with the samples supplied by said first Kalman filter (9) up to the instant of start of rain. The samples thus modified are overwritten in the register as if they were taken at the output of said first Kalman filter (9), thus prolonging the sequence of samples in conditions of absence of rain with the samples read from the register and suitably corrected by the offset, a reference level is produced for Es/NO dry to be used during the period with the presence of rain.

The attenuation of the signal read by the TRU (2), given the parameters of the satellite connection (noise temperatures and atmospheric attenuation) and having reconstructed the reference Es/NO level in the absence of rain as described above, the samples are read at the output of the second Kalman filter (10) which represent the Es/N0 samples in the presence of rain, and using a unique relationship that is analytically described by an algebraic equation with a non-explicit solution, the total attenuation in dB that occurred on the -TRU satellite section due to the presence of rain is determined.

Given the parameters of the two-layer tropospheric model (LL + ML), specially developed for this method, given the geometry of the satellite -TRU link, given the parameters that describe the law of attenuation of the radio signal in the presence of rain, both in the LL that in the ML, a specific equation is solved numerically from which an estimate of the instantaneous intensity of the rain on the ground (i.e. within the LL) expressed in mm/h is obtained.

For example, the conversion of the measure of total attenuation of the satellite signal induced by rain along the path (in dB) into an estimate of rain intensity (in mm/h) based on a two-layer melting layer (ML) tropospheric model and liquid layer (LL) through a unique relationship that is analytically described by an algebraic equation, can be performed as specified below, as a non-limiting example.

A two-layer tropospheric model is used, structured as follows:

∘ Liquid Layer (LL) in which the precipitation is entirely in the liquid state and which extends from $h_s$ (altitude above sea level (a.s.l) from the receiving station (TRU)) up to $h_{ML/LL}$ (altitude above sea level of the interface between the two layers);

∘ Melting Layer (ML) wherein the precipitation passes from the solid state (ice) to the liquid one and which extends from $h_{ML/LL}$ (altitude above sea level of the interface between the two layers) up to $h_0$ (altitude above sea level of the isotherm at zero degrees).

- All the quotas are referred to the sea level, positive, increasing in ascending direction, such that

$$0 \leq h_s \leq h_{ML/LL} < h_0$$

- The thickness of the ML is given by

$$\delta_{ML} = h_0 - h_{ML/LL}$$

- The thickness of the LL is given by

$$\delta_{LL} = h_0 - \delta_{ML} - h_s$$

- Within the ML the rainfall intensity with respect to the altitude is described by a mixed model,
- in the ML the fraction of liquid precipitation, and therefore also the intensity of rain (in mm/h), increases linearly when the altitude drops from $h_0$ to $h_{ML/LL}$ , so we have

$$R_{ML}(h)\,[\text{mm/h}] = \left( \frac{h_0 - h}{\delta_{ML}} \right) \cdot R_{LL}\,[\text{mm/h}] \text{, for } h_{ML/LL} \leq h \leq h_0$$

- in ML the specific attenuation $k_{ML}(h)$ [dB/km] is linked to the rainfall intensity $R_{ML}(h)$ [mm/h] through a relationship in the shape $\alpha R^\beta$

$$k_{ML}(h)\,[\text{dB/km}] = \alpha_{ML}\left( R_{ML}(h)\,[\text{mm/h}] \right)^{\beta_{ML}}$$

whose coefficients and are however calculated through a specific relationship valid for the ML and are therefore different from those used for the LL, $\alpha_{LL}$ and $\beta_{LL}$.
- Using this model, the total attenuation in dB in the ML $K_{ML}$ [dB] is given by

$$K_{ML}(R_{LL})\,[\text{dB}] = \int_{h_0 - \delta_{ML}}^{h_0} k_{ML}(h)\,[\text{dB/km}]\,\frac{\text{d}h}{\sin\vartheta} = \alpha_{ML}\left( R_{LL}\,[\text{mm/h}] \right)^{\beta_{ML}} \left[ \frac{\delta_{ML}}{(\beta_{ML} + 1)\sin\vartheta} \right] [\text{dB}]$$

where $\vartheta$ is the angle of elevation of the satellite above the horizon with respect to the position of the TRU.
- Within the LL the rainfall intensity (in mm/h) with respect to the altitude is assumed to be constant, that is

$$R_{LL}(h)\,[\text{mm/h}] = R_{LL}\,[\text{mm/h}] \text{, for } h_s \leq h \leq h_{ML/LL}$$

- In the LL the specific attenuation $k_{LL}$ [dB/km] is linked to the rainfall intensity $R_{LL}$ [mm/h]through a relationship in the shape $\alpha R^\beta$

$$k_{LL}\,[\text{dB/km}] = \alpha_{LL}\left( R_{LL}\,[\text{mm/h}] \right)^{\beta_{LL}}$$

- Using this model, the total attenuation in dB within the LL is given by

$$K_{LL}(R_{LL})\,[\mathrm{dB}] = k_{ML}(h) \cdot \left( \frac{h_0 - \delta_{ML} - h_s}{\sin\vartheta} \right)[\mathrm{dB}] = \alpha_{LL} \left( R_{LL}\,[\mathrm{mm/h}] \right)^{\beta_{LL}} \cdot \left( \frac{h_0 - \delta_{ML} - h_s}{\sin\vartheta} \right)[\mathrm{dB}]$$

- Since the specific attenuation in the ML is not always significantly larger than that in the underlying rainfall region, the proposed model predicts that in the calculation of the total attenuation within the two layers (ML and LL) the effect must be taken into account of the ML only for low values of rain intensity, that is $R_{LL} \leq 2$ mm/h. For this purpose, the following weight function is introduced

$$\eta(R_{LL}) = \frac{1}{1 + \left( \dfrac{R_{LL}\,[\mathrm{mm/h}]}{2\,\mathrm{mm/h}} \right)^{\gamma}}$$

which allows to write the total attenuation in the ML and LL

$$K_{TOT}\,[\mathrm{dB}] = \eta(R_{LL}) \cdot K_{ML}(R_{LL})\,[\mathrm{dB}] + K_{LL}(R_{LL})\,[\mathrm{dB}]$$

in which the exponent $\gamma$ has been chosen so that the 2 characteristics $K_{ML}(R_{LL})$ and $K_{LL}(R_{LL})$ are gradually connected and the total attenuation has a monotonically non-decreasing trend.
- Total attenuation $K_{TOT}$ [dB] is calculated as follows

$$K_{TOT}\,[\mathrm{dB}] = \chi \cdot \hat{K}_{TOT}\,[\mathrm{dB}]$$

Where $\hat{K}_{TOT}$[dB] is the value of the additional attenuation of the power of the microwave signal transmitted by satellite and received by the TRU in the "wet" condition (i.e. in the presence of rain) compared to the "dry" condition (i.e. in the absence of rain) which is determined at starting from the $E_s / N_0$ measurements provided by the TRU, filtered through a pair of Kalman filters, and using the data previously stored in the 1440 size register. The parameter $\chi$ represents an appropriate correction factor that takes into account the geometry and dimensions of the rain cells.
- Finally, the following algebraic equation is obtained which is solved with numerical methods and provides the estimate of the intensity of rainfall on the ground $R_{LL}$ [mm/h]

$$\chi \cdot \hat{K}_{TOT}\,[\mathrm{dB}] = \frac{1}{1 + \left( \dfrac{R_{LL}\,[\mathrm{mm/h}]}{2\,\mathrm{mm/h}} \right)^{\gamma}} \cdot \alpha_{ML} \left( R_{LL}\,[\mathrm{mm/h}] \right)^{\beta_{ML}} \left[ \frac{\delta_{ML}}{(\beta_{ML}+1)\sin\vartheta} \right][\mathrm{dB}] +$$

$$+ \alpha_{LL} \left( R_{LL}\,[\mathrm{mm/h}] \right)^{\beta_{LL}} \cdot \left( \frac{h_0 - \delta_{ML} - h_s}{\sin\vartheta} \right)[\mathrm{dB}]$$

Advantageously, the value of the "epsilon Stop" threshold is selected empirically, so as to provide a good compromise between the occurrence of false recognitions and failure to recognize the end of rain.

Even more advantageously, in order to avoid the occurrence of said phenomenon of the false recognition of the end of rain due to the set "epsilonStop" value, a method can be implemented further comprising the steps of:

- waiting, from the beginning of the precipitation, for a certain interval to pass lasting a few minutes (guard interval) before starting with the calculations and at the same time loading the samples coming out of the second Kalman filter (10) in the memory register of a floating window filter;
- processing, after the guard interval, for each sampling instant, the output samples from said second Kalman filter (10) stored in said register of the mobile window filter, obtaining the mean value and the standard deviation thereof;
- comparing, for each sampling instant, the estimate of the standard deviation of the samples outgoing from said second Kalman filter (10) obtained by means of the mobile window filter with a suitable threshold, determined empirically; if the deviation is greater than the threshold, then it remains in the state of presence of rain, otherwise the transition to the state in the absence of rain is forced, the first Kalman filter (9) is reinitialized with the current state of the second filter Kalman (10) and from this moment onwards, in the presence of rain, the samples coming out of said first Kalman filter (9) are stored in the reference Es/NO register.

In this context, all the details can be replaced by equivalent elements and the materials, shapes and dimensions can be any.

### Key to symbols

| | | |
|---|---|---|
| $R_{LL}$ | mm / h | rainfall intensity in the LL to be obtained by solving the equation |
| $\chi$ | dimensionless | geometric correction factor |
| $\hat{K}_{TOT}$ | dB | total attenuation ML plus LL obtained by processing the measurements of $E_s / N_0$ |
| $\alpha_{ML}$ | dB / (mm/h) | multiplicative coefficient of the empirical relationship specific attenuation vs. rain intensity ($\alpha R^\beta$) in the ML |
| $\beta_{ML}$ | dimensionless | exponent of the empirical relationship specific attenuation vs. rain intensity ($\alpha R^\beta$) in the ML |
| $\alpha_{LL}$ | dB / (mm/h) | multiplicative coefficient of the empirical relationship specific attenuation vs. rain intensity ($\alpha R^\beta$) in the LL |
| $\beta_{LL}$ | dimensionless | exponent of the empirical attenuation relationship specific vs. rainfall intensity ($\alpha R^\beta$) in the LL |
| $\vartheta$ | degrees | angle of elevation of the satellite above the horizon with respect to the position of the TRU obtained from the geometry of the satellite-link TRU |
| $\delta_{ML}$ | km | thickness of the ML |
| $h_0$ | km | altitude asl of the isotherm at zero degrees obtained from short-term weather forecasts (e.g. WRM model), or by statistical processing on historical archive of measurements (e.g. MERRA database), or from tables, graphs, formulas of average annual data (e.g. ITU-R rec.) |
| $h_s$ | km | altitude from the receiving station (TRU) obtained from short-term weather forecasts (e.g. WRM model), or from statistical elaborations on historical archive of measurements (e.g. MERRA database), or from tables, graphs, formulas of average annual data (e.g. ITU-R rec.) |

### Claims

1. A method for estimating the presence of rain performed on a computer and **characterised in that** it comprises the steps of

   - inserting a set of static parameters (1), said set of static parameters (1) comprising standard deviations (5, 6) for at least two Kalman filters (9, 10), "epsilonStart" and "epsilonStop" thresholds expressed in dB, the minimum value of the instantaneous Es/N0 ratio (4) where the instantaneous ratio Es/NO is defined as the ratio between the average radiofrequency energy of a satellite signal received by a user terminal, TRU, during a symbol interval and the monolateral power density of the total white Gaussian additive noise, i.e. including both the one captured by the receiving antenna of the TRU and the one generated internally to the receiver circuits, the duration of the sliding window for estimating the standard deviation of output samples, the lag time measured from the beginning of the precipitation event, the threshold for the value of the estimated standard deviation (15) used to identify the end of a precipitation event,
   - inserting a set of dynamic parameters (7), said set of dynamic parameters (7) comprising an isotherm height above sea level and a thickness of a melting layer in the troposphere,
   - measuring an instantaneous Es/NO value (8),
   - comparing said instantaneous Es/NO value (8) with said minimum value of the instantaneous Es/NO ratio (4),
   - setting the instantaneous Es/NO values (8) lower than said minimum value of the instantaneous Es/NO ratio (4) equal to said minimum value of the instantaneous Es/NO ratio (4),
   - sending said values to a first Kalman filter (9) designed to remove disturbances due to tropospheric scintillation and gravitational perturbations on the orbit of the satellite (3), said first Kalman filter (9) having a KalmanST output (91),
   - sending said values to a second Kalman filter (10) configured with different standard deviation values (6) of the process noise, said second Kalman filter (10) having a KalmanFT output (101),

- defining the beginning of a precipitation event if a difference between said KalmanST output (91) and said KalmanFT output (101) exceeds said "epsilonStart" threshold value,

- defining the end of a precipitation event if a difference between said KalmanST output (91) and said KalmanFT output (101) is lower than said "epsilonStop" threshold value,

- converting the measure of the total attenuation of the satellite signal induced by rain along the path (in dB) into an estimate of rainfall intensity (in mm/h) based on a two-layer - melting layer (ML) and liquid layer (LL) - tropospheric model through a univocal relationship analytically described by an algebraic equation with a non-explicit solution.

2. The method for estimating the presence of rain according to claim 1, wherein a memory register (11) with 1440 elements is used, said elements being indexed with an index n = [0, ..., 1439], wherein said register (11) stores the KalmanST outputs (91) acquired at the rate of one sample per minute, if said difference between said KalmanST output (91) and said KalmanFT output (101) does not exceed said "epsilonStart" threshold value.

3. The method for estimating the presence of rain according to any one of the preceding claims, which calculates the difference between said KalmanST output (91) at element "n" and said KalmanFT output (101) at element "n" and subsequently the difference between said KalmanST output (91) at element "n + 1" and said KalmanFT output (101) at element "n + 1", and if said difference between said KalmanST output (91) and said KalmanFT output (101) at element "n" does not exceed said "epsilonStart" threshold value while instead said difference between said KalmanST output (91) and said KalmanFT output (101) at element "n + 1" exceeds said "epsilonStart" threshold value, the condition is defined as a "wet condition".

4. The method for estimating the presence of rain according to any one of the preceding claims, wherein said Kalman filters (9, 10) filter sources of disturbance of said instantaneous Es/NO ratio (8) due to tropospheric scintillation, satellite oscillation (3) and longitudinal drift of the orbital position of said satellite (3).

5. The method for estimating the presence of rain according to claim 1, wherein the instantaneous Es/NO value (8) is the ratio between the average radiofrequency energy received by the TRU (2) during a symbol interval and the unilateral power spectral density of the total additive white Gaussian noise.

6. The method for estimating the presence of rain according to claim 1, wherein said set of dynamic parameters (7) is obtained in the form of measurements produced in real time by weather detection systems.

7. The method for estimating the presence of rain according to claim 1, wherein said set of dynamic parameters (7) is obtained in the form of short-term forecasts produced by numerical weather forecast models, (i.e. Weather Research and Forecasting (WRF), Global Forecast System (GFS) and European Centre for Medium-range Weather Forecast (ECMWF)).

8. The method for estimating the presence of rain according to claim 1, wherein said set of dynamic parameters (7) is obtained in the form of statistical values updated at least every 24 hours (e.g. average value, possibly plus or minus a certain number of standard deviations, median value, or various percentiles, obtained for that given location, with reference to the day and time in question), or by statistical processing of historical data contained in special archives, e.g. Modern Era Retrospective-analysis for Research and Applications (MERRA).

9. The method for estimating the presence of rain according to any one of the preceding claims, wherein said Kalman filters (9, 10) are configured with the same standard deviation value (5) as the measurement noise caused by the tropospheric scintillation.

10. The method for estimating the presence of rain according to any one of the preceding claims, wherein said "epsilonStart" value is three times the value of said standard deviation (5) of the measurement noise caused by the tropospheric scintillation.

11. The method for estimating the presence of rain according to any one of the preceding claims, wherein the standard deviations (5, 6) are the deviation of the measurement noise (5) and the deviation of the process noise (6), respectively.

**Patentansprüche**

1. Verfahren zum Schätzen der Anwesenheit von Regen, das auf einem Computer ausgeführt wird und **dadurch gekennzeichnet ist, dass** es die folgenden Schritte umfasst

   - Einfügen eines Satzes statischer Parameter (1), wobei der Satz statischer Parameter (1) Standardabweichungen (5, 6) für mindestens zwei Kalman-Filter (9, 10), "epsilonStart" und "epsilonStop" Schwellenwerte, die in dB ausgedrückt sind, den Minimalwert des momentanen Es/NO-Verhältnisses (4) umfasst, wobei das momentane Es/NO-Verhältnis als das Verhältnis zwischen der mittleren Radiofrequenzenergie eines Satlitensignals, das von einem Benutzerterminal, TRU, während eines Symbolintervalls empfangen wird und der einseitigen Leistungsdichte des gesamten additiven weißen Gaußschen Rauschens, d.h. enthaltend sowohl das von der Empfangsantenne des TRU erfasste Rauschen als auch das intern in den Empfangsschaltungen erzeugte Rauschen, die Dauer des Gleitfensters zum Schätzen der Standardabweichung der Ausgangsproben, die Verzögerungszeit , die ab Beginn des Niederschlagsereignisses gemessen wird, der Schwellenwert für den geschätzten Standardabweichungswert (15), der zur Identifizierung des Endes eines Niederschlagsereignisses verwendet wird,
   - Einfügen eines Satzes dynamischer Parameter (7), wobei der Satz dynamischer Parameter (7) eine Isothermenhöhe über dem Meeresspiegel und eine Dicke der Schmelzschicht in der Troposphäre umfasst,
   - Messen eines momentanen Es/NO-Wertes (8),
   - Vergleichen des momentanen Es/NO-Wertes (8) mit dem Minimalwert des momentanen Es/NO-Verhältnisses (4),
   - Einstellen der momentanen Es/NO-Werte (8), die niedriger als der Minimalwert des momentanen Es/NO-Verhältnisses (4) sind, gleich dem Minimalwert des momentanen Es/NO-Verhältnisses (4),
   - Senden der Werte an einen ersten Kalman-Filter (9), der ausgelegt ist, Störungen aufgrund von troposphärischer Szintillation und Gravitationsstörungen auf der Satellitenbahn (3) zu entfernen, wobei der erste Kalman-Filter (9) einen KalmanST-Ausgang (91) aufweist,
   - Senden der Werte an einen zweiten Kalman-Filter (10), der mit unterschiedlichen Standardabweichungswerten (6) des Prozessrauschens konfiguriert wird, wobei der zweite Kalman-Filter (10) einen KalmanFT-Ausgang (101) aufweist,
   - Definieren des Beginns eines Niederschlagsereignisses, wenn eine Differenz zwischen dem KalmanST-Ausgang (91) und dem KalmanFT-Ausgang (101) den "epsilonStart" Schwellenwert überschreitet,
   - Definieren des Endes eines Niederschlagsereignisses, wenn eine Differenz zwischen dem KalmanST-Ausgang (91) und dem KalmanFT-Ausgang (101) unter dem "epsilonStop" Schwellenwert liegt,
   - Umwandeln der Messung der Gesamtabschwächung des Satlitensignals, die durch Regen verursacht wird, entlang des Pfades (in dB) in eine Schätzung der Niederschlagsintensität (in mm/h) basierend auf einem troposphärischen - zwei-Schichten - Schmelzschicht (ML) und Flüssigkeitsschicht (LL) - Modell durch eine eindeutige Beziehung, die analytisch durch eine algebraische Gleichung ohne explizite Lösung beschrieben wird.

2. Verfahren zum Schätzen der Anwesenheit von Regen nach Anspruch 1, wobei ein Speicherregister (11) mit 1440 Elementen verwendet wird, wobei die Elemente mit einem Index n = [0, ..., 1439] indiziert werden, wobei das Register (11) die KalmanST-Ausgänge (91) speichert, die mit der Geschwindigkeit von einem Muster pro Minute erfasst werden, wenn die Differenz zwischen dem KalmanST-Ausgang (91) und dem KalmanFT-Ausgang (101) den "epsilonStart" Schwellenwert nicht überschreitet.

3. Verfahren zum Schätzen der Anwesenheit von Regen nach einem der vorhergehenden Ansprüche, das die Differenz zwischen dem KalmanST-Ausgang (91) an Element "n" und dem KalmanFT-Ausgang (101) an Element "n" und anschließend die Differenz zwischen dem KalmanST-Ausgang (91) an Element "n + 1" und dem KalmanFT-Ausgang (101) an Element "n + 1" berechnet, und wenn die Differenz zwischen dem KalmanST-Ausgang (91) und dem KalmanFT-Ausgang (101) an Element "n" den "epsilonStart" Schwellenwert nicht überschreitet, während die Differenz zwischen dem KalmanST-Ausgang (91) und dem KalmanFT-Ausgang (101) an Element "n + 1" hingegen den "epsilonStart" Schwellenwert überschreitet, wird die Bedingung als "nasse Bedingung" definiert.

4. Verfahren zum Schätzen der Anwesenheit von Regen nach einem der vorhergehenden Ansprüche, wobei die Kalman-Filter (9, 10) Störquellen des momentanen Es/NO-Verhältnisses (8) aufgrund troposphärischer Szintillation, Satellitenschwankung (3) und Längsdrift der Orbitalposition des Satelliten (3) filtern.

5. Verfahren zum Schätzen der Anwesenheit von Regen nach Anspruch 1, wobei der momentane Es/NO-Wert (8) das Verhältnis zwischen der mittleren Radiofrequenzenergie ist, die von dem TRU (2) während eines Symbolintervalls empfangen wird, und der einseitigen Leistungsspektraldichte des gesamten additiven weißen gaußschen Rauschens.

6. Verfahren zum Schätzen der Anwesenheit von Regen nach Anspruch 1, wobei der Satz dynamischer Parameter (7) in Form von Messungen erhalten wird, die von Wettererkennungssystemen in Echtzeit erzeugt werden.

7. Verfahren zum Schätzen der Anwesenheit von Regen nach Anspruch 1, wobei der Satz dynamischer Parameter (7) in Form kurzfristiger Vorhersagen erhalten wird, die durch numerische Wettervorhersagemodelle erzeugt werden (z. B. Wetterforschung und Vorhersagemodell (WRF), Gesamtvorhersagesystem (GFS) und Europäisches Zentrum für mittelfristige Wettervorhersage (ECMWF)).

8. Verfahren zum Schätzen der Anwesenheit von Regen nach Anspruch 1, wobei der Satz dynamischer Parameter (7) in Form von statistischen Werten erhalten wird, die mindestens alle 24 Stunden aktualisiert werden (z. B. Durchschnittswert, eventuell zuzüglich oder abzüglich einer bestimmten Anzahl von Standardabweichungen, Medianwert oder verschiedene Perzentile, die für den betreffenden Ort in Bezug auf den jeweiligen Tag und die jeweilige Uhrzeit erhalten werden), oder durch statistische Verarbeitung historischer Daten aus speziellen Archiven, z. B. Modern Era Retrospective-Analyse für Forschung und Anwendungen (MERRA).

9. Verfahren zum Schätzen der Anwesenheit von Regen nach einem der vorhergehenden Ansprüche, wobei die Kalman-Filter (9, 10) mit demselben Standardabweichungswert (5) für das Messrauschen konfiguriert sind, das durch troposphärische Szintillation verursacht wird.

10. Verfahren zum Schätzen der Anwesenheit von Regen nach einem der vorhergehenden Ansprüche, wobei der Wert "epsilonStart" dem Dreifachen des Wertes der Standardabweichung (5) des Messrauschens entspricht, das durch die troposphärische Szintillation verursacht wird.

11. Verfahren zum Schätzen der Anwesenheit von Regen nach einem der vorhergehenden Ansprüche, wobei die Standardabweichungen (5, 6) jeweils die Abweichung des Messrauschens (5) und die Abweichung des Prozessrauschens (6) sind.

**Revendications**

1. Procédé pour estimer la présence de pluie, mis en œuvre sur un ordinateur et **caractérisé en ce qu'**il comprend les étapes consistant à

- insérer un ensemble de paramètres statiques (1), ledit ensemble de paramètres statiques (1) comprenant des écarts-types (5, 6) pour au moins deux filtres de Kalman (9, 10), des seuils "epsilonStart" et "epsilonStop" exprimés en dB, la valeur minimale du rapport instantané Es/NO (4), ledit rapport instantané Es/NO étant défini comme le rapport entre l'énergie radiofréquence moyenne d'un signal satellitaire reçu par un terminal utilisateur, TRU, pendant un intervalle de symbole, et la densité de puissance spectrale unilatérale du bruit blanc gaussien additif total, c'est-à-dire comprenant à la fois celui capté par l'antenne de réception du TRU et celui généré à l'intérieur des circuits du récepteur, la durée de la fenêtre glissante pour estimer l'écart-type des échantillons de sortie, le temps de retard mesuré à partir du début de l'événement de précipitation, le seuil de la valeur de l'écart-type estimé (15) utilisé pour identifier la fin d'un événement de précipitation,
- insérer un ensemble de paramètres dynamiques (7), ledit ensemble de paramètres dynamiques (7) comprenant une hauteur d'isotherme au-dessus du niveau de la mer et une épaisseur de la couche de fusion dans la troposphère,
- mesurer une valeur instantanée Es/NO (8),
- comparer ladite valeur instantanée Es/NO (8) avec ladite valeur minimale du rapport instantané Es/NO (4),
- fixer les valeurs instantanées Es/NO (8) inférieures à ladite valeur minimale du rapport instantané Es/NO (4) égales à ladite valeur minimale du rapport instantané Es/NO (4),
- envoyer lesdites valeurs à un premier filtre de Kalman (9) conçu pour éliminer les perturbations dues à la scintillation troposphérique et aux perturbations gravitationnelles sur l'orbite du satellite (3), ledit premier filtre de Kalman (9) ayant une sortie KalmanST (91),
- envoyer lesdites valeurs à un second filtre de Kalman (10) configuré avec différentes valeurs d'écart-type (6) du bruit de processus, ledit second filtre de Kalman (10) ayant une sortie KalmanFT (101),

- définir le début d'un événement de précipitation si une différence entre ladite sortie KalmanST (91) et ladite sortie KalmanFT (101) dépasse ladite valeur seuil "epsilonStart",
- définir la fin d'un événement de précipitation si une différence entre ladite sortie KalmanST (91) et ladite sortie KalmanFT (101) est inférieure à ladite valeur seuil "epsilonStop",
- convertir la mesure de l'atténuation totale du signal satellitaire induite par la pluie le long du trajet (en dB) en une estimation de l'intensité des précipitations (en mm/h) sur la base d'un modèle troposphérique à deux couches - couche de fusion (ML) et couche liquide (LL) - par une relation univoque décrite analytiquement par une équation algébrique sans solution explicite.

2. Procédé pour estimer la présence de pluie selon la revendication 1, dans lequel un registre mémoire (11) avec 1440 éléments est utilisé, lesdits éléments étant indexés avec un index n = [0, ..., 1439], dans lequel ledit registre (11) stocke les sorties KalmanST (91) acquises à une fréquence d'un échantillon par minute, si ladite différence entre ladite sortie KalmanST (91) et ladite sortie KalmanFT (101) ne dépasse pas ladite valeur seuil "epsilonStart".

3. Procédé pour estimer la présence de pluie selon l'une quelconque des revendications précédentes, qui calcule la différence entre ladite sortie KalmanST (91) au niveau de l'élément "n" et ladite sortie KalmanFT (101) au niveau de l'élément "n" et ensuite la différence entre ladite sortie KalmanST (91) au niveau de l'élément "n + 1" et ladite sortie KalmanFT (101) au niveau de l'élément "n + 1", et si ladite différence entre ladite sortie KalmanST (91) et ladite sortie KalmanFT (101) au niveau de l'élément "n" ne dépasse pas ladite valeur seuil "epsilonStart", alors que ladite différence entre ladite sortie KalmanST (91) et ladite sortie KalmanFT (101) au niveau de l'élément "n + 1" dépasse ladite valeur seuil "epsilonStart", la condition est définie comme une "condition humide".

4. Procédé pour estimer la présence de pluie selon l'une quelconque des revendications précédentes, dans lequel lesdits filtres de Kalman (9, 10) filtrent les sources de perturbation du rapport instantané Es/NO (8) dues à la scintillation troposphérique, aux oscillations du satellite (3) et à la dérive longitudinale de la position orbitale dudit satellite (3).

5. Procédé pour estimer la présence de pluie selon la revendication 1, dans lequel la valeur instantanée Es/NO (8) est le rapport entre l'énergie radiofréquence moyenne reçue par le TRU (2) pendant un intervalle de symbole et la densité de puissance spectrale unilatérale du bruit blanc gaussien additif total.

6. Procédé pour estimer la présence de pluie selon la revendication 1, dans lequel ledit ensemble de paramètres dynamiques (7) est obtenu sous forme de mesures produites en temps réel par des systèmes de détection météorologique.

7. Procédé pour estimer la présence de pluie selon la revendication 1, dans lequel ledit ensemble de paramètres dynamiques (7) est obtenu sous forme de prévisions à court terme produites par des modèles numériques de prévision météorologique (c'est-à-dire Weather Research and Forecasting (WRF), Global Forecast System (GFS) et European Centre for Medium-range Weather Forecast (ECMWF))

8. Procédé pour estimer la présence de pluie selon la revendication 1, dans lequel ledit ensemble de paramètres dynamiques (7) est obtenu sous forme de valeurs statistiques mises à jour au moins toutes les 24 heures (par exemple valeur moyenne, éventuellement plus ou moins un certain nombre d'écarts-types, valeur médiane ou divers percentiles, obtenus pour ce lieu donné, en référence au jour et à l'heure concernés), ou par traitement statistique de données historiques contenues dans des archives spéciales, par exemple Modern Era Retrospective-analysis for Research and Applications (MERRA).

9. Procédé pour estimer la présence de pluie selon l'une quelconque des revendications précédentes, dans lequel lesdits filtres de Kalman (9, 10) sont configurés avec la même valeur d'écart-type (5) que le bruit de mesure causé par la scintillation troposphérique.

10. Procédé pour estimer la présence de pluie selon l'une quelconque des revendications précédentes, dans lequel ladite valeur "epsilonStart" est égale à trois fois la valeur dudit écart-type (5) du bruit de mesure causé par la scintillation troposphérique.

11. Procédé pour estimer la présence de pluie selon l'une quelconque des revendications précédentes, dans lequel les écarts-types (5, 6) sont respectivement l'écart du bruit de mesure (5) et l'écart du bruit de processus (6).

*Fig. 1*

EP 4 189 444 B1

**EP 4 189 444 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2688223 A1

- WO 2018092031 A1